(19) Europäisches Patentamt European Patent Office Office européen des brevets

(11) **EP 3 110 130 A1**

(12) **EUROPEAN PATENT APPLICATION**

(43) Date of publication:
28.12.2016 Bulletin 2016/52

(51) Int Cl.:
*H04N 5/225* (2006.01)  *G02B 3/14* (2006.01)
*G02B 27/22* (2006.01)

(21) Application number: 15305988.6

(22) Date of filing: 25.06.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Thomson Licensing
92130 Issy-les-Moulineaux (FR)

(72) Inventors:
• DRAZIC, VALTER
35576 CESSON SEVIGNE CEDEX (FR)
• SEIFI, MOZHDEH
35576 CESSON SEVIGNE CEDEX (FR)
• SABATER, NEUS
35576 CESSON SEVIGNE CEDEX (FR)

(74) Representative: Huchet, Anne
TECHNICOLOR
1-5, rue Jeanne d'Arc
92130 Issy-les-Moulineaux (FR)

(54) **PLENOPTIC CAMERA AND METHOD OF CONTROLLING THE SAME**

(57)     A plenoptic camera (2) comprises a camera lens (20), also called main lens, a microlens array (22) and a photosensor array (24). An additional lens (21) is arranged between the camera lens and the microlens array. The focal length of the additional lens is set to be equal to a value corresponding to the distance between the camera lens and the additional lens.

Fig 2

## Description

### 1. Technical domain

The present disclosure relates to the domain of plenoptic camera and light-field acquisition devices and methods. The present disclosure also relates to the domain of calibrating a plenoptic camera.

### 2. Background art

According to the background art, it is known to acquire different views of a same scene with a plenoptic camera, also called light-field camera. To obtain the different views, a raw image (comprising the data collected by a photosensor array of the plenoptic camera) is demosaiced and de-multiplexed. The demosaicing enables to recover a full color raw image, i.e. to recover full color information (for example RGB information, RGB standing for "Red", "Green" and "Blue") for the pixels of the raw image while the raw image acquired with the plenoptic camera associates only one color component (R, G or B for example) with each pixel. The demultiplexing performed after the demosaicing enables to recover the different views of the scene, i.e. to group the pixels of the demosaiced raw image according to the view they belong to.

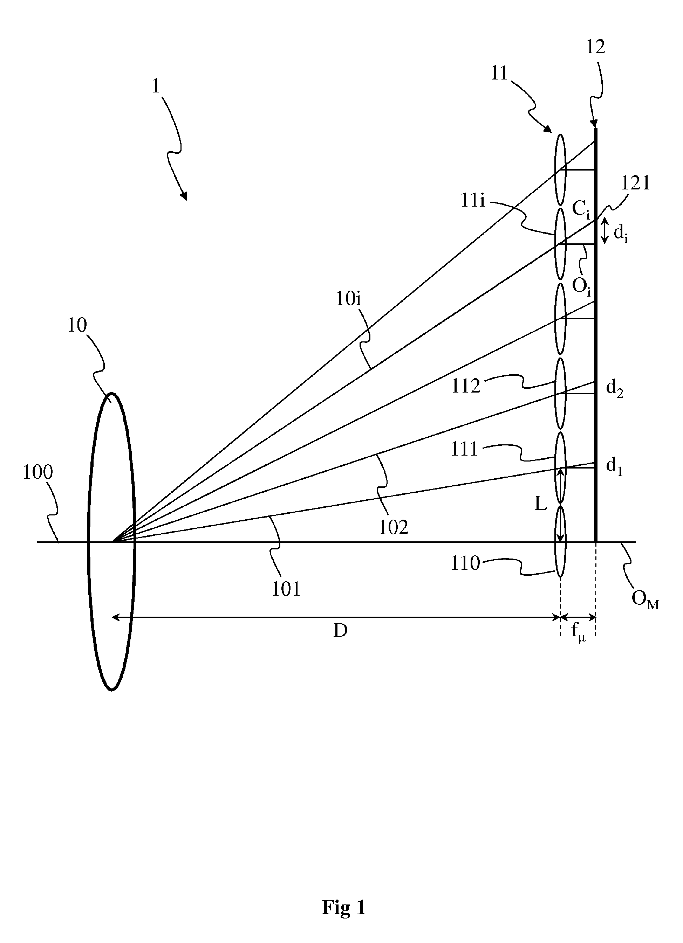

As schematically illustrated in **Figure 1**, a plenoptic camera 1 uses a micro-lens array 11 of micro-lenses 110, 111, 112, 11i positioned in the image plane of a main lens 10 and before a photosensors array 12 onto which one micro-image (also called sub-image) per micro-lens is projected. In this configuration, each micro-image depicts a certain area of the captured scene and each pixel associated with that micro-image depicts this certain area from the point of view of a certain sub-aperture location on the main lens exit pupil.

The raw image of the scene obtained as a result is the sum of all the micro-images acquired from respective portions of the photosensors array 12. This raw image contains the angular information of the light-field. In fact, the angular information is given by the relative position of pixels in the micro-images with respect to the centre of these micro-images. Based on this raw image, the extraction of an image of the captured scene from a certain point of view, also called "de-multiplexing" in the following description, can be performed by concatenating the in-raw pixels covered by each micro-image. This process can also be seen as a data conversion from a 2D raw image into a 4D light-field.

The de-multiplexing process consists in reorganizing the pixels of the raw image in such a way that all pixels capturing the scene with a certain angle of incidence are stored in the same image, also called "view". Each view of the set of views is a projection of the scene under a different angle of view and has as many pixels as the number of micro-lenses.

For the sake of de-multiplexing the raw image, it is necessary to correlate each pixel of the micro-images with the corresponding sub-aperture location on the main lens exit pupil. Yet, to identify the pixels associated with the same perspective, it is necessary to know the centre of the micro-images formed on the photosensor.

However, the micro-lens centres are not necessarily well aligned with the pixels of the photosensor. Indeed, the micro-lens diameter does not cover an integer number of pixels.

Furthermore, because of the optical designs of the plenoptic cameras, the pitch between micro-images formed on the photosensor is not constant and changes as a function of the field angle. Indeed, as illustrated in Figure 1, although the micro-lenses of the micro-lens array 11 placed in front of the photosensors array 12 are uniformly distributed (equidistant arrangement in which the pitch between two adjacent micro-lenses of the micro-lens array 11 is identical), the pitch between micro-images formed on the photosensors array 12 increases linearly from the centre to the periphery of the photosensors array 12. Considering $f_\mu$ the distance between the photosensors array 12 and the micro-lens array 11 (i.e. focal distance of the micro-lenses), $D$ the distance between the main lens 10 and the micro-lens array 11 (i.e. focal distance of the main lens 10 assuming the main lens focuses at infinity) and $L$ the inter-microlens distance, the local shift $d_i$ of the centre $C_i$ 121 of the micro-image formed by the micro-lens $11_i$ onto the photosensors array 12 with respect to the optical axis ($O_i$) of that micro-lens $11_i$ is defined by:

$$d_i = i \frac{L f_\mu}{D}$$

with $i$ the index of the considered micro-lens (comprised between 0 and 6 in figure 1) and $i$ a integer number equal to the index $i$.

From this equation, it is observed that the more the micro-lens $11_i$ is placed far from the optical axis $O_M$, the more the micro-image is shifted from the optical axis ($O_i$) of the corresponding micro-lens $i$, leading to a non-uniform distribution of the micro-images on the photosensors array 12. It is also observed that if D varies, the distribution of the micro-images (and of their corresponding centers) also varies on the photosensors array 12 with D.

According to a prior art solution, the centre of each micro-image is estimated on the basis of a set of calibrated white images, each calibrated white image being associated with a given set of focusing-distance/zoom parameters. With such a solution, it is required to estimate one set of micro-image centres for every set of focusing-distance/zoom parameters of the plenoptic camera, i.e. to estimate the micro-image centers each time the main lens has undergone a change, either in zooming or in focalization.

## 3. Summary

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a plenoptic camera comprising a camera lens, a microlens array comprising a plurality of microlenses and a photosensor array. The plenoptic camera further comprises an additional lens arranged between the camera lens and the microlens array, the additional lens being arranged at a distance from the camera lens, the additional lens having a focal length corresponding to the distance.

A uniform distribution of micro-images projected onto the photosensor may thus be obtained by the use of the additional lens that is adapted to shift the output light ray in a direction parallel to the main optical axis.

Advantageously, the focal length of the additional lens varies with the distance.

According to a particular characteristic, the additional lens is arranged adjacent to the microlens array.

Advantageously, the additional lens belongs to the group of lens with varying focal length comprising:

-    electrically-driven varifocal lens;
-    electro-optic variable focal-length lens using ceramic; and
-    electro-optic variable focal-length lens using liquid crystal; and
-    pressure varifocal lens.

According to a specific characteristic, the plenoptic camera comprises means for determining said distance, for example a processing unit, e.g. one or more processors.

Advantageously, the plenoptic camera further comprises means for controlling said additional lens, for example a processing unit, e.g. one or more processors.

The present disclosure also relates to a method of controlling a plenoptic camera, the plenoptic camera comprising a camera lens, a microlens array comprising a plurality of microlenses and a photosensor array, characterized in that the method comprises controlling a focal length of an additional lens arranged between the camera lens and the microlens array, the additional lens being arranged at a distance from the camera lens, the focal length being controlled in such a way to correspond to the distance.

Advantageously, the method further comprises adjusting the focal length when the distance varies.

According to a specific characteristic, the additional lens is arranged adjacent to the microlens array.

According to another characteristic, the method further comprises determining the distance.

The invention also relates to a telecommunication device comprising the plenoptic camera.

The invention also relates to a computer program product comprising instructions of program code for executing at least a step of the method of controlling a plenoptic camera, when the program is executed on a computer.

The invention also relates to a non-transitory processor readable medium having stored therein instructions for causing a processor to perform at least a step of the method of controlling a plenoptic camera.

## 4. List of figures

The present disclosure will be better understood, and other specific features and advantages will emerge upon reading the following description, the description making reference to the annexed drawings wherein:

-    figure 1 shows a plenoptic camera according to the background art;
-    figure 2 shows a plenoptic camera, according to a particular embodiment of the present principles;
-    figure 3 shows the travel of light rays in the plenoptic camera of figure 2, according to a particular embodiment of the present principles;
-    figure 4 shows a method of controlling the plenoptic camera of figure 2, according to a particular embodiment of the present principles;
-    figure 5 shows a telecommunication device comprising the plenoptic camera of figure 2, according to a particular embodiment of the present principles.

## 5. Detailed description of embodiments.

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

According to a particular embodiment of the present principles, a plenoptic camera comprises a camera lens, also called main lens, a microlens array and a photosensor array. An additional lens is arranged between the camera lens and the microlens array at a distance $L_1$ from the camera lens. The focal length of the additional lens is set to be equal to a value corresponding to the distance $L_1$.

Setting the focal length of the additional lens to the distance between the camera lens and the additional lens array enables the chief rays of light passing through the additional lens and through the centers of the microlenses of the microlens array to be parallel to the optical axis of the plenoptic camera when getting out from the additional lens. This may lead to a simplified process of determining the micro-image centres on the photosensor array.

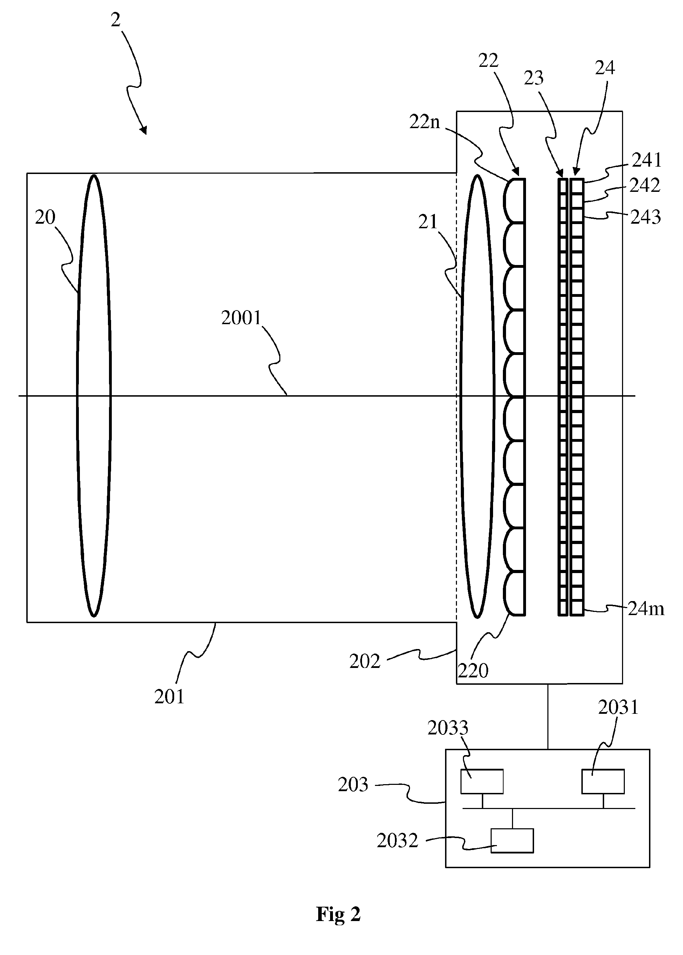

**Figure 2** shows a plenoptic camera 2 according to a particular embodiment of the present principles. The plenoptic camera comprises a lens unit 201 (corresponding to an optical assembly) and a camera body 202.

The lens unit 201 is advantageously adapted to be associated with the camera body 202. The camera body 202 comprises a photosensors array 24, which comprises a plurality m of photosensors 241, 242, 243 to 24m. Each photosensor corresponds to a pixel of the raw image of the scene acquired with the photosensor array, with each pixel encompassing a part (also called a point) of the scene. For purposes of illustration, the photosensor array 24 is shown with a relative small number of photosensors 241 to 24m. Naturally, the number of photosensors is not limited by the illustration of figure 1 but extends to any number of photosensors, for example several thousand or several millions of photosensors. For example in a 12.4 megapixel camera, a pixel will correspond to a photosensor (e.g. corresponding to an array of 4088 x 3040 pixels / photosensors). A color filter array (CFA) 23 may be arranged on the photosensors array 24. The CFA 23 typically arranges RGB (Red, Green and Blue) color filters on the photosensor array, the RGB arrangement taking for the example the form of a Bayer filter mosaic. According to a variant, a CFA is arranged on the microlens array 22, also called lenslet array, (in addition to the CFA 23 or in replacement of the CFA 23).

The camera body 202 also comprises a microlens array 22 comprising n microlenses 220 to 22n, n being an integer greater than or equal to 2. For purposes of illustration, the microlens array 22 is shown with a relative small number of microlenses, but the number of microlenses may extend up to several thousand or even one or several million of microlenses. A group of photosensors of the photosensor array 24 are optically associated with each microlens 220 to 22n of the microlens array 22. For example, each microlens 220 to 22n of the microlens array 22 is sized to correspond to an array of 2x1, 4x4 or 10x10 photosensors. A group of photosensors associated with a microlens (or said differently, a group of photosensors under the microlens) form a micro-image associated with this microlens, each photosensor of the group of photosensors forming a pixel of the micro-image. Each photosensor of the plurality of photosensors optically associated with one single microlens enables to acquire raw data representative of a pixel of the scene according to one position (acquisition of as many parallaxes as pixels).

The camera body 202 further comprises an additional lens 21 arranged between the microlens array 22 and a main lens 20. The additional lens 21, also called field lens, is arranged in such a way that the chief rays of light of the microlenses (i.e. the rays of light coming from the scene through the lens unit 201 and passing through the centers of the microlenses) are parallel to the optical axis 2001 of the plenoptic camera 2. In other words, the additional lens 21 is arranged in such a way that the light of rays exiting this additional lens and passing through the centers of the microlens are parallel to the optical axis 2001. To achieve that aim, the focal length of the additional lens 21 is such that it is equal to a value corresponding to the distance between the main lens 20 and the additional lens 21. During the manufacturing process of the plenoptic camera 2, this distance is set with a determined value as the additional lens 21 is arranged at a fixed position in the plenoptic camera. The additional lens 21 is for example arranged adjacent to the microlens array 22, meaning that the additional lens 21 and the microlens 22 are in contact with each other. According to a variant, a gap of for example 1 or several millimetres is formed between the additional lens 21 and the microlens array 22. The gap may be composed of air, or an optical material having an index n (for example a glass layer) or of multiple layers comprising at least one layer air layer and at least one optical material layer. Using a glass layer to form the gap has the advantages of keeping the microlens array at a same distance from the photosensor array in each and every location. The focal length of the additional lens 21 is advantageously a variable focal length, which enables to maintain the focal length equal to the distance between the main lens 20 and the additional lens 21 (once the additional lens is arranged in the plenoptic camera) when this distance varies, for example when adapting the zoom or the focus of the camera lens. Indeed, when zooming or focusing, the distance between the main lens 20 and the additional lens (which is at a fixed position once arranged in the plenoptic camera) is changed, even for only a few millimetres or less (as described for example in https://en.wikipedia.org/wiki/Zoom_lens or in http://www.adaptall-2.com/articles/InsideZoomLens/InsideZoomLens.html). When the distance between the main lens 20 and the additional lens 21 is modified, the focal length of the additional lens 21 is modified accordingly. The additional lens 21 comprises for example an electro-optical material sandwiched between a conductor layer and a resistor layer. The focal length is for example controlled by applying a voltage to the resistor layer, such as described in the US Patent N° 7312917 B2 dated 25 December 2007. The additional lens 21 belongs for example to the group of lenses with varying focal length comprising, i.e. the additional lens 21 corresponds to one of the following lenses:

- electrically-driven varifocal lens, for example a lens comprising a liquid (e.g. oil or silicone) sandwiched between two membranes or substrates, at least one of the substrate being elastic, which enables to modify the curvature of the at least one elastic membrane and consequently the focal length of the lens; the curvature of the membrane(s) is for example controlled with one or more electrodes, which are used to generate electrostatic forces on the elastic membrane(s) to deform it (them); Examples of such a electrically-driven varifocal lens are for example described in "Electrically Driven Varifocal Micro Lens Fabricated by Depositing Parylene Directly on Liquid", written by Binh-Khiem Nguyen et al., published in Micro Electro Mechanical Systems, 2007, or in "The liquid lens technology - How it works and what it is doing", written by B. Berge from Varioptic SA, 02 December 2010;

- electro-optic variable focal-length using ceramic, as described in "Motionless dynamic system for 3-D optical memory based on PLZT electro-optic lenses", written by Qi Wang Song, Fianl Technical Report, Syracuse University, February 1998;

- electro-optic variable focal-length using liquid cristal, as described in "Liquid Crystal Lenses: Liquid crystals promise compact lenses with variable focus", written by Liwei Li et al., extracted from laserfocusworld.com; and

- variable focal-length lens with a liquid or a gas sandwiched between two membranes, at least one of the membrane being elastic, which enables to modify the curvature of the at least one elastic membrane and consequently the focal length of the lens; the curvature of the membrane(s) is for example controlled by varying the pressure of the liquid or the gas sandwiched between the membranes, such as described in the US Patent N° 5574598 dated 12 November 1996.

According to a variant, the focal length of the additional lens is set as a constant value, i.e. the value of the focal length cannot be controlled or changed. Such a situation may occur when the plenoptic camera 2 is configured with a constant focus and no possibility for zooming, i.e. the focal of the main lens is not adjustable.

For associating the lens unit 201 with the camera body 202, the lens unit 201 comprises a first attaching part and the camera body 202 comprises a second attaching part, the first and second attaching parts being compatible with each other. Thanks to the first and second attaching parts, the lens unit 201 may be clipped onto the camera body 202 or the lens unit 201 may be screwed with the camera body 202. An example of such first and second attaching parts of a lens unit configured to be associated with a camera body may be found in the Japanese patent application JP2013-105151 A, which was published on May 30, 2013. The first and second attaching parts are configured in such a way that, once the lens unit 201 and the camera body 202 have been put together, the lens unit 201 and the camera body 202 form a plenoptic camera configured for acquiring multiple views of a scene at each acquisition of the scene. According to a variant, the lens unit 201 and the camera body 202 collectively form one single body and are assembled without being detachable.

The lens unit 201 comprises a camera lens 20, also called a main lens or primary lens, which is advantageously formed of one or more lens elements, only one lens element 20 being depicted in figure 2 for clarity purpose.

According to a variant, the additional lens 21 is comprised in the lens unit 201 instead of in the camera body 202.

The plenoptic camera 2 advantageously comprises a hardware module 203 configured for controlling the plenoptic camera, for example for controlling the focal length of the additional lens 21. The module 203 is further configured for detecting a change in one or more parameters of the camera lens 20, for example a change of the focal length of the camera lens and/or a change of the focussing distance occurring when focalizing or zooming. A change of the focal length of the camera lens and/or a change of the focussing distance occurring when focalizing or zooming results in a change of the distance between the camera lens 20 and the additional lens 21. The hardware module is advantageously configured to perform the calibration of the plenoptic camera 1, i.e. by determining the center of each micro-image or of each microlens. According to a variant, the hardware module 203 is configured to store metadata comprising the coordinates of the centers of the micro-images and/or of the microlenses. The module may be comprised in the camera body 202 or in the lens unit 201. The module advantageously comprises one or several processors 2031 associated with a memory, for example Random Access Memory or RAM 2032 comprising one or more registers. The memory stores instructions of one or more algorithms implementing the method of controlling the plenoptic camera 2. According to a variant, the module takes the form of a programmable logical circuit of type FPGA (Field-Programmable Gate Array) for example, ASIC (Application-Specific Integrated Circuit) or a DSP (Digital Signal Processor). The module comprises a power source 2033 comprising for example a variable voltage source capable of applying various bias voltages to the layer(s) forming the additional lens. The power source is advantageously controlled by the processor 2031. The module may also comprise an interface configured to receive and transmit data such as control parameters input by a user via a user interface to set the plenoptic camera 1, the user interface being for example displayed on a display screen (for example a LCD or an OLED display) arranged for example on the camera body 202.

According to a variant, the module is not comprised in the plenoptic camera but connected to the plenoptic camera via a wired connection (for example via USB (Universal Serial Bus)) or via a wireless connection (for example via Bluetooth, Wi-Fi or ZigBee). According to this variant, the module advantageously comprises a transmitter to exchange data with the plenoptic camera. According to this variant, the power source 2033 is comprised in the plenoptic camera 2.

The plenoptic camera 2 is equally of the type 1.0, corresponding to a plenoptic camera wherein the distance between the microlens array 22 and the photosensor array 24 is equal to the microlenses focal length, or of the type 2.0 otherwise (also called focused plenoptic camera).

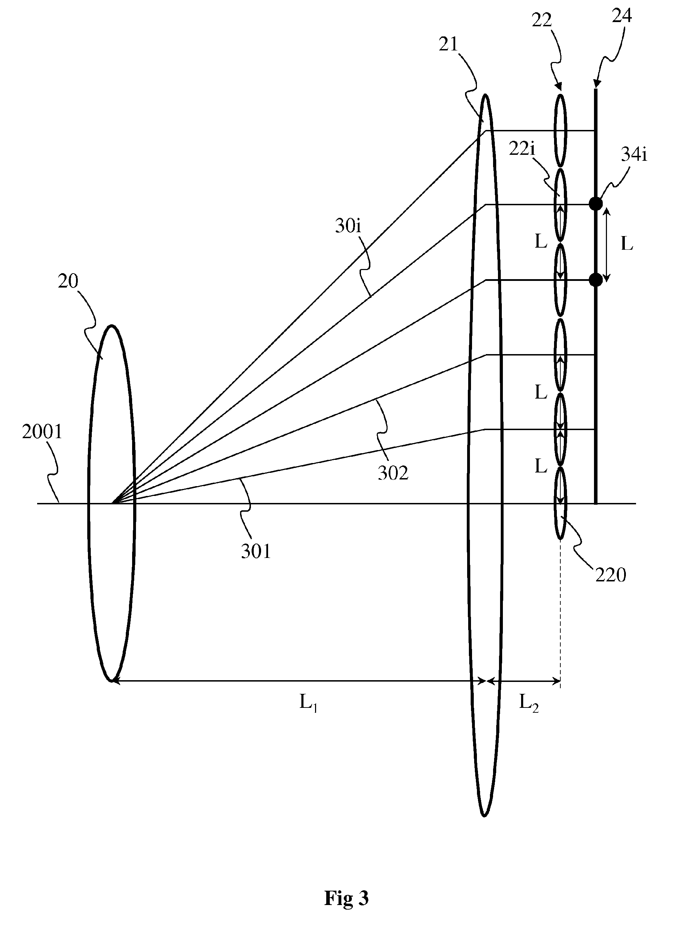

**Figure 3** shows the travel of light rays 301, 302, 30i in the plenoptic camera 2, according to a particular embodiment of the present principles.

The additional lens 21 is arranged between the camera lens 20 and the microlens array 22, at a fixed position, e.g. during the manufacturing of the plenoptic camera or when adding such an additional lens to an existing plenoptic camera, at a distance $L_1$ from the main lens and at a distance $L_2$ from the microlens array 22. The focal length of the additional lens 21 is equal to a value corresponding to the distance $L_1$ between the camera lens 20 and the additional lens 21. When the camera lens 20 is a thin lens, the distance $L_1$ corresponds to the distance between the rear face of the camera lens 20 (i.e. the face facing the additional lens, i.e. the output face of the camera lens 20) and the median plane of the additional lens 21 in the width of the additional lens, i.e. along the optical axis 2001. When the camera lens 20 is a compound lens, i.e. an arrangement of several lenses, the distance $L_1$ corresponds to the distance between the rear principal plane (also called secondary principal plane) of the camera lens 20 and the median plane of the additional lens 21.

The distance $L_1$ is advantageously much greater than the distance $L_2$. According to a non-limiting example, $L_1$ may be considered as being equal to the distance D (defined as corresponding to the distance between the camera lens 20 and the lenslet array 22) and $L_2$ to 0 (the width of the additional lens 21 and of the microlens array 22 being negligible compared to D), when the additional lens 21 and the microlens array 22 are in contact with each other.

As the focal length of the additional lens 21 is equal to the distance $L_1$, the chief rays of light 301, 302 and 30i passing through the centers of the microlenses 220, 22i are parallel to the optical axis 2001 of the plenoptic camera 2, i.e. the rays of light that get out the additional lens and pass through the centers of the microlenses of the microlens array 22 are parallel to the optical axis 2001 of the plenoptic camera 2. Setting the focal length of the additional lens 21 to the distance $L_1$ enables to get a constant distance between the centers of the micro-images formed under the microlenses on the photosensors array 24. The distance between the centers of two adjacent micro-images is equal to the distance, referenced L, between the centers of the corresponding microlenses. A regular arrangement of the centers of the micro-images on the photosensors array 24 helps when determining these centers when calibrating the plenoptic camera 2. Moreover, as the focal length of the additional lens 21 is controlled to be equal to $L_1$ even when the distance $L_1$ varies (for example when zooming or focusing), the locations of the centers of the micro-images on the photosensors array 24 do not vary. It enables to avoid the determining of the centers of the micro-images each and every time the zooming and/or focusing parameters of the camera lens 20 change. By taking the example of the $i^{th}$ microlens 22i, the ray of light 30i is parallel to the optical axis 2001 once output from the additional lens 21 and the point hit by this ray 30i is the center 34i of the micro-image formed under the microlens 30i, the same point being hit by the ray 30i, whatever the focusing distance and/or zooming parameter of the camera lens 20, i.e. whatever the value of the distance $L_1$. By adjusting the focal length of the additional lens 21 to the varying distance $L_1$, the optical system of the plenoptic camera 2 is telecentric in the image space (i.e. in the space of the photosensors array 24).

The rays of light originating from a same point of the camera lens 20 exit the additional lens 21 parallel to each other.

Arranging the additional lens 21 in contact with (or adjacent to) the microlens array 22 enables to reduce overlap and/or crosstalk between the micro-images formed under the microlenses onto the photosensors array 24.

Arranging the additional lens 21 at a distance $L_2$ non null from the microlens array 22 may render the manufacturing process of the plenoptic camera 2 easier by non-imposing a strict constraint on the distance $L_2$.

To reduce chromatic aberration, the additional lens 21 is advantageously specified for the center of the light spectrum, i.e. for the green wavelength. Naturally, the additional lens 21 may be specified for any other wavelength, for example the blue or red wavelength.

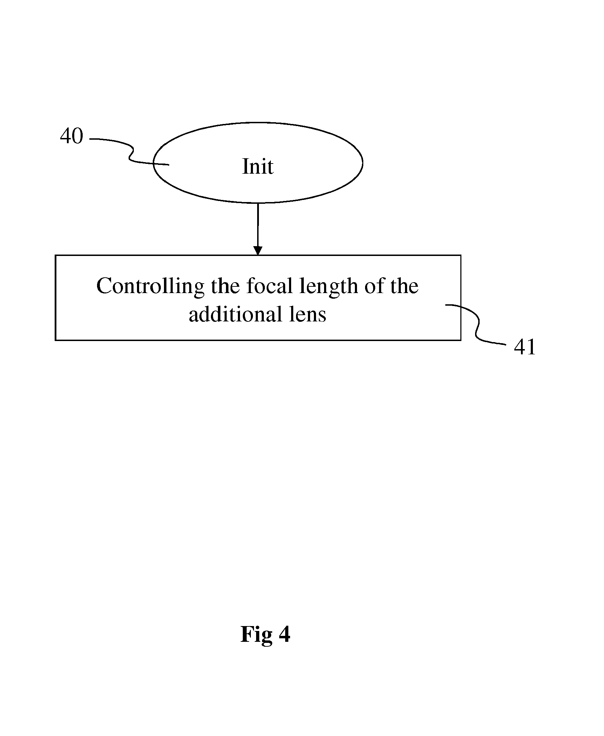

**Figure 4** shows a method of controlling the plenoptic camera of figure 2, according to a particular embodiment of the present principles.

During an initialisation step 40, the different parameters of the plenoptic camera, notably the parameters of the camera 20 lens and the focal length of the additional lens 21 are updated. The parameters are for example initialized when powering up the plenoptic camera and/or when changing the parameter of the camera lens, for example the focal length, when zooming or focalizing.

Then during a step 41, the focal length of the additional lens 21 is controlled to correspond to the distance $L_1$ between the camera lens 20 and the additional lens 21. The focal length of the additional lens 21 is for example adjusted by controlling a voltage applied to one or both membranes forming the envelop of the additional lens 21. The distance $L_1$ is for example determined from the zooming and/or focusing parameters set for the camera lens 20, for example by the module 203.

According to an optional step, the centers of the micro-images are determined. The centers of the micro-images are for example determined by using one white image acquired with a given distance $L_1$ (for example the distance $L_1$ set at the manufacturing of the plenoptic camera), the focal length of the additional lens 21 being set to this given distance $L_1$ to determine the centers.

According to another optional step, the different views of the scene are generated by demultiplexing and demosaicing the raw image using the information relative to the centers of the micro-images.

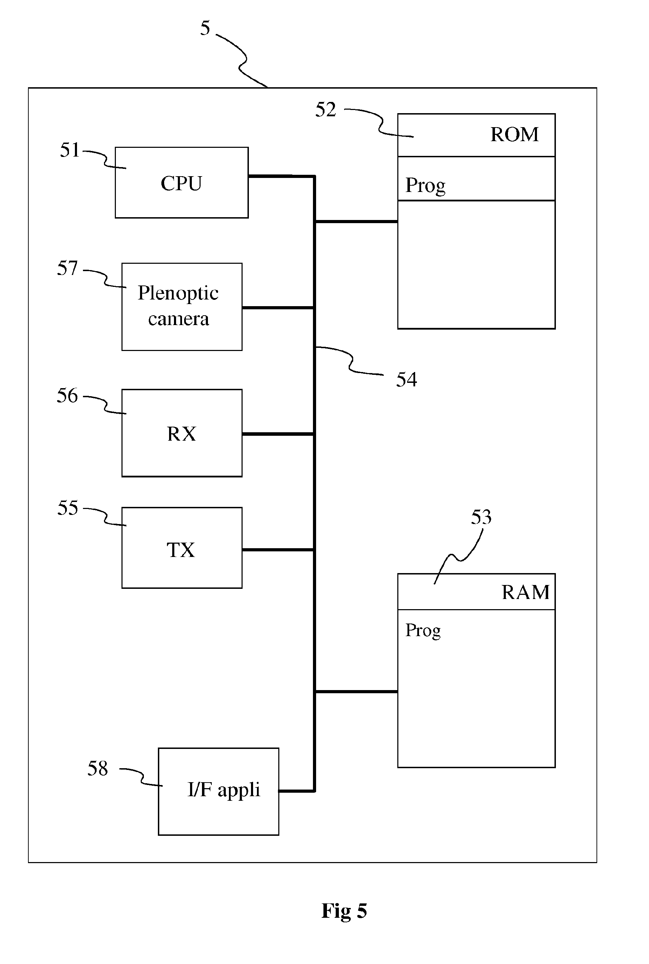

**Figure 5** diagrammatically illustrates a hardware embodiment of a telecommunication device 5, corresponding for example to a smartphone or a tablet that embodies a plenoptic camera in accordance with an aspect of the present principles.

The telecommunication device 5 comprises the following elements, connected to each other by a bus 54 of addresses and data that also transports a clock signal:

- a microprocessor 51 (or CPU),
- a non-volatile memory of ROM (Read Only Memory) type 52,
- a Random Access Memory or RAM 53,
- a radio interface 56,
- an interface 55 adapted for the transmission of data,
- a plenoptic camera 57, corresponding for example to the plenoptic camera 2 of figure 2,
- an MMI (Man Machine Interface) 58 adapted for displaying information for a user and/or inputting data or parameters.

It is noted that the word "register" used in the description of memories 52 and 53 designates in each of the memories mentioned, a memory zone of low capacity as well as a memory zone of large capacity (enabling a whole programme to be stored or all or part of the data representing data received and decoded).

The memory ROM 52 comprises in particular a "prog" program.

The algorithms implementing the steps of the method specific to the present disclosure and described below are stored in the ROM 52 memory associated with the telecommunication device 5 implementing these steps. When powered up, the microprocessor 51 loads and runs the instructions of these algorithms.

The random access memory 53 notably comprises:

- in a register, the operating programme of the microprocessor 51 responsible for switching on the telecommunication device 5,
- reception parameters (for example parameters for modulation, encoding, MIMO, recurrence of frames),
- transmission parameters (for example parameters for modulation, encoding, MIMO, recurrence of frames),
- incoming data corresponding to the data received and decoded by the receiver 56,
- decoded data formed to be transmitted at the interface to the application 55,
- parameters of the camera lens and/or information representative of the centers of the micro-images formed by the microlenses of the microlens array.

Other structures of the telecommunication device 5 than those described with respect to figure 5 are compatible with the present disclosure. In particular, according to variants, the telecommunication device may be implemented according to a purely hardware realisation, for example in the form of a dedicated component (for example in an ASIC (Application Specific Integrated Circuit) or FPGA (Field-Programmable Gate Array) or VLSI (Very Large Scale Integration) or of several electronic components embedded in an apparatus or even in a form of a mix of hardware elements and software elements.

The radio interface 56 and the interface 55 are adapted for the reception and transmission of signals according to one or several telecommunication standards such as IEEE 802.11 (Wi-Fi), standards compliant with the IMT-2000 specifications (also called 3G), with 3GPP LTE (also called 4G), IEEE 802.15.1 (also called Bluetooth)...

According to a variant, the telecommunication device does not include any ROM but only RAM, the algorithms implementing the steps of the method specific to the present disclosure being stored in the RAM.

Naturally, the present disclosure is not limited to the embodiments previously described.

In particular, the present disclosure is not limited to a plenoptic camera but also extends to the method of controlling and/or calibrating the same and to the hardware circuitry implementing the controlling/calibration method.

Telecommunication devices includes, for example, smartphones, smartwatches, tablets, computers, mobile phones, portable/personal digital assistants ("PDAs"), and other devices that facilitate communication of information between end-users but also set-top-boxes.

The method of calibrating the plenoptic camera described herein may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

**1.** A plenoptic camera (2) comprising a camera lens (20), a microlens array (22) comprising a plurality of microlenses and a photosensor array (24), **characterized in that** the plenoptic camera (2) further comprises an additional lens (21) arranged between the camera lens (20) and the microlens array (22), the additional lens (21) being arranged at a distance $(L_1)$ from the camera lens (20), the additional lens (21) having a focal length corresponding to said distance $(L_1)$.

**2.** The plenoptic camera according to claim 1, wherein the focal length of the additional lens (21) varies with said distance $(L_1)$.

**3.** The plenoptic camera according to claim 1 or 2, wherein the additional lens (21) is arranged adjacent to the microlens array (22).

**4.** The plenoptic camera according to one of claims 1 to 3, wherein the additional lens (21) belongs to the group of lens with varying focal length comprising:

- electrically-driven varifocal lens;
- electro-optic variable focal-length lens using ceramic;
- electro-optic variable focal-length lens using liquid crystal; and
- pressure varifocal lens.

**5.** The plenoptic camera according to one of claims 1 to 4, further comprising means (203) for determining said distance $(L_1)$.

**6.** The plenoptic camera according to one of claims 1 to 5, further comprising means (203) for controlling said additional lens (21).

**7.** A method of controlling a plenoptic camera, said plenoptic camera comprising a camera lens, a microlens array comprising a plurality of microlenses and a photosensor array, **characterized in that** the method comprises controlling (41) a focal length of an additional lens arranged between the camera lens and the microlens array, the additional lens being arranged at a distance $(L_1)$ from the camera lens, the focal length being controlled in such a way to correspond to said distance $(L_1)$.

**8.** The method according to claim 7, further comprising adjusting said focal length when said distance $(L_1)$ varies.

**9.** The method according to claim 7 or 8, wherein the additional lens is arranged adjacent to the microlens array.

**10.** The method according to one of claims 7 to 9, wherein the additional lens belongs to the group of lens with varying focal length comprising:

- electrically-driven varifocal lens;
- electro-optic variable focal-length lens using ceramic;
- electro-optic variable focal-length lens using liquid crystal; and
- pressure varifocal lens.

**11.** The method according to one of claims 7 to 10, further comprising determining said distance $(L_1)$.

**12.** A computer program product comprising instructions of program code for executing at least a step of the method according to one of claims 7 to 11, when said program is executed on a computer.

**12.** A non-transitory processor readable medium having stored therein instructions for causing a processor to perform at least a step of the method according to one of claims 7 to 11.

**13.** A telecommunication device (5) comprising the plenoptic camera according to any one of claims 1 to 6.

**Fig 1**

**Fig 2**

**Fig 3**

40 — Init

Controlling the focal length of the
additional lens

41

**Fig 4**

5

51 CPU

52 ROM

Prog

57 Plenoptic camera

54

56 RX

55 TX

53 RAM

Prog

58 I/F appli

**Fig 5**

Europäisches
Patentamt

European
Patent Office

Office européen
des brevets

# EUROPEAN SEARCH REPORT

Application Number

EP 15 30 5988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2012 105436 A1 (CONTI TEMIC MICROELECTRONIC [DE]) 24 December 2013 (2013-12-24) * paragraphs [0040], [0041]; figures 3,4 * | 1-13 | INV. H04N5/225 G02B3/14 G02B27/22 |
| X | US 2009/140131 A1 (UTAGAWA KEN [JP]) 4 June 2009 (2009-06-04) * paragraphs [0153] - [0154]; figure 20 * | 1-13 | |
| X | EP 2 757 790 A1 (SAMSUNG ELECTRONICS CO LTD [KR]) 23 July 2014 (2014-07-23) * paragraph [0037]; figure 4 * | 1-13 | |
| A | EP 2 495 593 A1 (OPTOELECTRONICS CO LTD [JP]) 5 September 2012 (2012-09-05) * paragraphs [0020] - [0026]; figure 1 * | 2,4-6,8, 10,11 | |

TECHNICAL FIELDS
SEARCHED (IPC)

H04N
G02B

The present search report has been drawn up for all claims

| Place of search | Date of completion of the search | Examiner |
|---|---|---|
| Munich | 29 September 2015 | Schinnerl, Arnold |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 5988

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2015

| Patent document cited in search report | | Publication date | Patent family member(s) | | Publication date |
|---|---|---|---|---|---|
| DE 102012105436 | A1 | 24-12-2013 | NONE | | |
| US 2009140131 | A1 | 04-06-2009 | JP | 4826152 B2 | 30-11-2011 |
| | | | JP | 2007004471 A | 11-01-2007 |
| | | | US | 2009140131 A1 | 04-06-2009 |
| | | | WO | 2006137481 A1 | 28-12-2006 |
| EP 2757790 | A1 | 23-07-2014 | AU | 2014210553 A1 | 23-07-2015 |
| | | | CN | 103945115 A | 23-07-2014 |
| | | | EP | 2757790 A1 | 23-07-2014 |
| | | | KR | 20140094395 A | 30-07-2014 |
| | | | TW | 201433159 A | 16-08-2014 |
| | | | US | 2014204183 A1 | 24-07-2014 |
| | | | WO | 2014115984 A1 | 31-07-2014 |
| EP 2495593 | A1 | 05-09-2012 | EP | 2495593 A1 | 05-09-2012 |
| | | | JP | 5637995 B2 | 10-12-2014 |
| | | | US | 2012261474 A1 | 18-10-2012 |
| | | | WO | 2011052770 A1 | 05-05-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7312917 B2
- US 5574598 A

- JP 2013105151 A

### Non-patent literature cited in the description

- **BINH-KHIEM NGUYEN et al.** Electrically Driven Varifocal Micro Lens Fabricated by Depositing Parylene Directly on Liquid. *Micro Electro Mechanical Systems,* 2007
- **B. BERGE.** *The liquid lens technology - How it works and what it is doing,* 02 December 2010

- **QI WANG SONG.** Motionless dynamic system for 3-D optical memory based on PLZT electro-optic lenses. *Fianl Technical Report,* February 1998
- **LIWEI LI et al.** *Liquid Crystal Lenses: Liquid crystals promise compact lenses with variable focus, laserfocusworld.com*